Europäisches Patentamt

European Patent Office

Office européen des brevets

(11) Publication number: **0 384 802**
**A1**

# EUROPEAN PATENT APPLICATION

(21) Application number: **90400371.2**

(22) Date of filing: **12.02.90**

(51) Int. Cl.5 **A62D 3/00, B01D 53/34,**
**C01B 21/083, C07C 19/00**

(30) Priority: **13.02.89 EP 89400390**

(43) Date of publication of application:
**29.08.90 Bulletin 90/35**

(84) Designated Contracting States:
**BE DE FR IT NL**

(71) Applicant: **L'AIR LIQUIDE, SOCIETE ANONYME
POUR L'ETUDE ET L'EXPLOITATION DES
PROCEDES GEORGES CLAUDE
75, Quai d'Orsay
F-75321 Paris Cédex 07(FR)**

(72) Inventor: **Hirase, Ikuo
5-9-9 Tokodai, Toyosato-machi
Tsucuba-Gun 300-26(JP)**
Inventor: **Petitjean, Mathieu
3, rue Général Estiennes
F-75015 Paris(FR)**

(74) Representative: **Vesin, Jacques et al
L'AIR LIQUIDE, SOCIETE ANONYME POUR
L'ETUDE ET L'EXPLOITATION DES
PROCEDES GEORGES CLAUDE 75, quai
d'Orsay
F-75321 Paris Cédex 07(FR)**

(54) **Method and apparatus for detoxicating halide of nitrogen or carbon.**

(57) A nitrogen halide or carbon halide gas is caused
to pass through a packed layer in which at least one
granular material selected from the group consisting
of silicon, molybdenum, tungsten, molybdenum silicide, and tungsten silicide is heated, so that the
halide gas and granular material react with each
other. The reaction product is treated with an alkali.
In this manner, a toxic halide gas can be detoxicated
with high efficiency.

The present invention related to a method and apparatus for treating a toxic halide at a high temperature, thereby detoxicating the halide.

A large amount of nitrogen halides such as nitrogen trifluoride ($NF_3$), dinitrogen tetrafluoride ($N_2F_4$), and nitrogen trichloride ($NCl_3$), or carbon halides such as Freon are widely used as a dry etching gas and various halide sources in semiconductor device manufacturing steps. In particular, it is assumed that latent demands for use of the halide in applications which require high etching rate and etching selectivity are very high.

Similar to many gases used in the electronic industry , a nitrogen halide, e.g., $NF_3$ has high toxicity and therefore must be detoxicated. In this case, this detoxication must be performed to observe the law protecting natural and working environments including regulations for a substance generated by the treatment.

Conventionally, $NF_3$ has been treated by the following two methods. In one method, $NF_3$ is burned at a high temperature of, e.g., 500°C using a fuel such as activated carbon, or hydrocarbon, thereby producing $N_2$ and $CF_4$. In the other method, $NF_3$ is decomposed on a solid phase such as $AlCl_3$ or $FeCl_3$.

In the former method, however, a fuel must be frequently replenished and a decomposition efficiency of $NF_3$ is low. In the latter method, although the decomposition efficiency in an early stage of treatment is high, a film of a decomposed product is formed on the surface of the solid phase because volatility or a decomposed product is low. As a result, the decomposition efficiency is significantly reduced as time passes.

It is an object of the present invention to provide a methode which can detoxicate a halide of nitrogen or carbon with high decomposition efficiency for a long time period without frequently changing a reaction phase.

It is another object of the present invention to provide an apparatus for carrying out the above method.

According to the present invention there is provided a method of detoxicating a halide of nitrogen or carbon, comprising the steps of causing a gas of halide of nitrogen or carbon to pass through a packed layer in which a granular material selected from the group consisting of silicon, molybdenum, tungsten, molybdenum silicide, and tungsten silicide is heated so that the halide gas and granular material react with each other and treating a reaction product with an alkali.

In the method of the present invention, although a heating temperature of the packed layer depends on the type of granular material, it is normally 300°C or higher. The upper limit of the heating temperature may be such temperature that a reaction vessel can withstand, and is not limitative. Especially when the granular material is molybdenum or tungsten, the heating temperature is preferably 450°C or higher. If the temperature is less than the lower limits of those range, a reaction speed is unduly low.

Though the grain size of the granular material is not limitative, it is preferably 0.1 to 5 mm in consideration of handling of the granular material and reaction efficiency.

Examples of the alkali for treating the reaction product from the packed layer are soda asbestos and soda lime.

Examples of a nitrogen halide to be detoxicated by the method of the present invention are nitrogen trifluoride ($NF_3$), dinitrogen tetrafluoride ($N_2F_4$), and nitrogen trichloride ($NCl_3$). Examples of a carbon halide are hydrocarbon halides such as Freon, e;g; $CF_4$, $CHF_3$, $CHClF_2$ and $C_2Cl_3F_3$.

In addition, according to the present invention, there is provided an apparatus for detoxication a halide of nitrogen or carbon, comprising a heating oven, a reaction chamber, heated by the heating oven, for housing a packed layer of granular material selected from the groug consisting of silicon, molybdenum, tungsten, molybdenum silicide, and tungsten silicide, and an alkali treatment chamber connected to the reaction chamber.

In the apparatus of the present invention, an inlet port of the reaction chamber is connected to the halide gas source, and a mass flow controller for adjusting a flow rate of a halide can be provided in this connection path. In addition, a path of an inactive gas as a purge gas or carrier gas can be connected to the connection path.

In the present invention, a toxic halide gas is caused to pass through the packed layer in which a granular material of silicon, molybdenum, tungsten, molybdenum silicide or tungsten silicide is heated, so that both the gas and granular material effectively react with each other. If nitrogen trifluoride ($NF_3$) is used as the halide gas and silicon is used as the granular material a reaction may, for example, progress in accordance with the following formula(1):

$$3Si + 4NF_3 \ggg 3SiF_4 + 2N_2 \quad (1)$$

$SiF_4$ generated by this, reaction is also a toxic substance and therefore should be treated by an alkali. If sodium hydroxide is used as the alkali, a reaction may, for example, progress in accordance with the following formula (2):

$$SiF_4 + 6NaOH \ggg Na_2SiO_3 + 4NaF + 3H_2O \quad (2)$$

In this manner, toxic $NF_3$ is efficiently detoxicated through the above two reactions.

As described above, according to the present invention, a toxic halide can be detoxicated with high decomposition efficiency for a long time period by utilizing a reaction between the halide and a granular material of silicon or the like without frequently changing a reaction phase. In addition, an apparatus for the reaction can be made very compact and hence is highly practical.

A drawing is a flow diagram showing an experimental apparatus for detoxicating a halide according to an embodiment of the present invention.

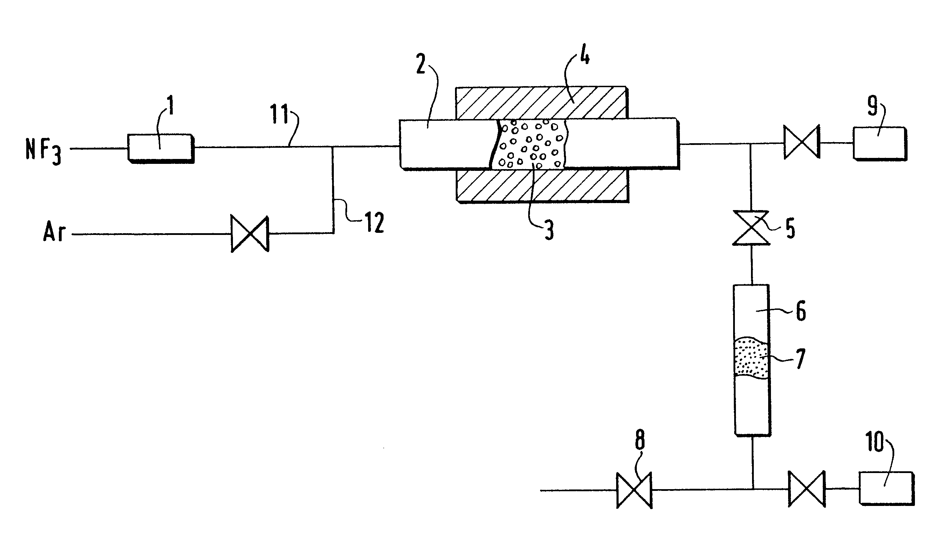

The present invention will be described in detail below with reference to the accompanying drawing.

The drawing is a flow diagram showing an experimental apparatus for detoxicating a halide according to an embodiment of the present invention. A halide, e:g;, NF₃ gas is supplied to reaction chamber 2 while its flow rate is controlled by mass flow controller 1. Chamber 2 is a stainless steel cylinder having a diameter of 50MM. Packed layer 3 consisting of, e.g., silicon grains is housed in chamber 2. Heating over 4 is arranged around chamber 2 to heat layer 3 up to a predetermined temperature.

A reaction product gas from chamber 2 is supplied to alkali treatment chamber 6 through valve 5. Alkali absorbent 7 is housed in chamber 6. A treated gas from chamber 6 is exhausted outside through valve 8.

Analyzers 9 and 10 are arranged after chambers 2 and 6, respectively, and analyze the gases if necessary. Pipe 12 for supplying argon gas as a purge gas or carrier gas is connected to pipe 11 at an inlet of chamber 2.

The present invention will be described in more detail below by way of its examples in which NF₃ gas was treated using the above apparatus.

Example 1

Using a granular silicon having an average grain size of 2 mm a sa granular material and soda asbestos as an alkali absorbent, NF₃ was detoxicated under the following conditions:
Flow Rate of NF₃ Gas: 30SCCM
Temperature of Granular Silicon: 390° C
Weight of Granular Silicon: 200g

The NF₃ gas concentration in a gas treated under the above conditions was analyzed by a quadrupole mass spectrometer to obtain a decomposition efficiency. As a result, the decomposing efficiency was as very high as 99.99%.

Using a granular tungsten having an average grain size of 1mm as granular material and soda asbestos and soda lime an alkali absorbent, NF₃ gas was detoxicated under the following conditions:
Flow Rate of NF₃ Gas: 30 SCCM
Temperature of Granular Tungsten: 500° C
Weight of Granular Tungsten: 200g

The NF₃ gas concentration in a gas treated under the above conditions was analyzed by a quadrupole mass spectrometer to obtain a decomposition efficiency. As a result, the decomposition efficiency was as very high as 99.9%.

Example 3

Using a granular molybdenum having an average grain size of 1.5mm as granular material and soda asbestos and soda lime as an alkali absorbent, NF₃ gas was detoxicated under the following conditions:
Flow Rate of NF₃ Gas: 30SCCM
Temperature of Granular Molybdenum: 500° C
Weight of Granular Molybdenum: 200g

The NF₃ gas concentration in a gas treated under the above conditions was analyzed by a quadrupole mass spectrometer to obtain a decomposition efficiency. As a result, the decomposition efficiency was as very high as 99.9%.

**Claims**

1. A method of detoxicating halide of nitrogen or carbon, characterized by comprising the steps of:
causing a nitrogen halide or carbon halide gas to pass through a packed layer in which at least one granular material selected from the group consisting of silicon, molybdenum, tungsten, molybdenum silicide, and tungsten silicide is heated so that said halide gas and said granular react with each other; and treating a reaction product with an alkali.

2. A method according to claim 1, characterized in that a heating temperature of said packed layer is 300° C or higher.

3. A method according to claim 1, characterized in that said granular material is molybdenum, or tungsten, and a heating temperature of said packed layer is 320° C or higher.

4. A method according to claim 1, characterized in that a grain size of said granular material is 0.1 to 5mm.

5. A method according to claim 1, characterized in that the alkali for treating the reaction product from said packed layer is soda asbestos or soda lime.

6. A method according to claim 1, characterized in that said nitrogen halide is nitrogen trifluoride (NF₃), dinitrogen tetrafluoride (N₂F₄), or nitrogen trichloride (NC&₃).

7. A method according to claim 1, characterized in that said carbon halide is hydrocarbon halide.

8. A method according to claim 7, characterized in that said hydrocarbon halide is CF₄, CHF₃,

$CHCl_2$, or $C_2Cl_3F_3$.

9. An apparatus for detoxicating a nitrogen halide or carbon halide, characterized by comprising:

a heating oven;

a reaction chamber, heated by said heating oven, for housing a packed layer of at least one granular material selected from the group consisting of silicon molybdenum, tungsten, molybdenum silicide, and tungsten silicide; and

an alkali treatment chamber connected to said reaction chamber.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 11, no. 38 (C-401)[2485], 4th February 1987; & JP-A-61 204 025 (CENTRAL GLASS CO. LTD) 10-09-1986 <br> * Abstract * <br> --- | 1-6,9 | A 62 D   3/00 <br> B 01 D  53/34 <br> C 01 B  21/083 <br> C 07 C  19/00 |
| A | CHEMICAL ABSTRACTS, vol. 106, no. 3, 19th January 1987, page 533, abstract no. 17748e, Columbus, Ohio, US; G. MU et al.: "Kinetics of unimolecular reaction of chlorodifluoromethane on tungsten surface", & WULI HUAXUE XUEBAO 1986, 2(3), 284-7 <br> * Abstract * <br> --- | 1,3,7,8 | |
| A | DE-A-3 432 033 (FRIEDRICH-SCHILLER-UNIVERSITÄT DIREKTORAT FORSCHUNG) <br> * Whole document * <br> ----- | 1-5,7-9 | |
| | | | TECHNICAL FIELDS SEARCHED (Int. Cl.5) <br><br> A 02 D <br> B 01 D <br> C 01 B <br> C 07 C |

The present search report has been drawn up for all claims

| Place of search | Date of completion of the search | Examiner |
|---|---|---|
| THE HAGUE | 21-05-1990 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)